# EUROPEAN PATENT APPLICATION

(11) **EP 4 636 282 A1**
(43) Date of publication of application: **22.10.2025**
(21) Application number: 23903226.1
(22) Date of filing: 21.11.2023
(51) Int. Cl.: F16H 57/04

(54) **PLANETARY GEAR DEVICE**

(30) Priority: 13.12.2022 JP 2022198650
(71) Applicant: KAWASAKI JUKOGYO KABUSHIKI KAISHA, Kobe-shi, Hyogo 650-8670 (JP)
(72) Inventor: NISHIDA, Takunobu, Kobe-shi, Hyogo 650-8670 (JP); FUJII, Isao, Kobe-shi, Hyogo 650-8670 (JP); ARISAWA, Hidenori, Kobe-shi, Hyogo 650-8670 (JP); KONDO, Koki, Kobe-shi, Hyogo 650-8670 (JP); SHINODA, Yuji, Kobe-shi, Hyogo 650-8670 (JP); TANAKA, Mitsuaki, Kobe-shi, Hyogo 650-8670 (JP); HASHIMOTO, Hironori, Kobe-shi, Hyogo 650-8670 (JP)
(74) Representative: Dantz, Jan Henning
(86) International application number: PCT/JP2023/041825
(87) International publication number: WO 2024/127930

(57) **Abstract**

A planetary gear device includes a sun gear, planetary gears, planetary shafts, a ring gear, and a carrier including a plate that supports first end portions of the planetary shafts. The plate of the carrier includes at least one oil discharge passage including an oil inlet and an oil outlet located outside the oil inlet in a radial direction orthogonal to an axis.

## Description

### Technical Field

The present disclosure relates to a planetary gear device.

### Background Art

PTL 1 discloses a gear box including a planetary gear mechanism and a housing accommodating the planetary gear mechanism. The planetary gear mechanism includes a sun gear, planetary gears, a ring gear, and a carrier. The gear box includes: a supply port through which lubricating oil is supplied to the planetary gear mechanism; and a discharge port through which the lubricating oil which has lubricated the planetary gear mechanism is discharged to the outside of the housing.

### Citation List

### Patent Literature

PTL 1: Japanese Laid-Open Patent Application Publication No. 2018-151060

### Summary of Invention

### Technical Problem

The lubricating oil which has lubricated the planetary gear mechanism may not reach the discharge port and may stay at a place where the lubricating oil interferes with the planetary gear mechanism. Such lubricating oil becomes operating resistance of the planetary gear mechanism, and this generates an energy loss.

An object of one aspect of the present disclosure is to satisfactorily reduce an energy loss of a planetary gear device.

### Solution to Problem

A planetary gear device according to one aspect of the present disclosure includes: a sun gear including external teeth lined up in a circumferential direction around an axis; planetary gears each including external teeth that mesh with the external teeth of the sun gear and a through hole that is open in an axial direction in which the axis extends; planetary shafts that are in the respective through holes of the planetary gears and rotatably support the respective planetary gears; a ring gear including internal teeth that mesh with the external teeth of the planetary gears; and a carrier including a plate that supports first end portions of the planetary shafts. The plate includes at least one oil discharge passage including an oil inlet and an oil outlet located outside the oil inlet in a radial direction orthogonal to the axis.

### Advantageous Effects of Invention

According to one aspect of the present disclosure, when centrifugal force is applied to lubricating oil staying at such a place as to interfere with the planetary gear device, the lubricating oil flows into the oil inlet of the plate of the carrier, flows through the oil discharge passage outward in the radial direction, and is discharged through the oil outlet. Therefore, the lubricating oil which has lubricated the planetary gear device is prevented from staying, and this can satisfactorily reduce the energy loss of the planetary gear device.

### Brief Description of Drawings

FIG. 1 is a sectional view of a planetary gear device according to Embodiment 1 when viewed in a rotation axis direction.
FIG. 2 is a sectional view taken along line II-II of FIG. 1.
FIG. 3 is a sectional perspective view of a carrier of FIG. 2.
FIG. 4 is an enlarged sectional view of an oil discharge passage shown in FIG. 2.
FIG. 5 is an enlarged sectional view of a modified example of the oil discharge passage of FIG. 4.
FIG. 6 is a sectional view of the planetary gear device according to Embodiment 2.
FIG. 7 is a sectional view of the planetary gear device according to Embodiment 3.

### Description of Embodiments

Hereinafter, embodiments will be described with reference to the drawings.

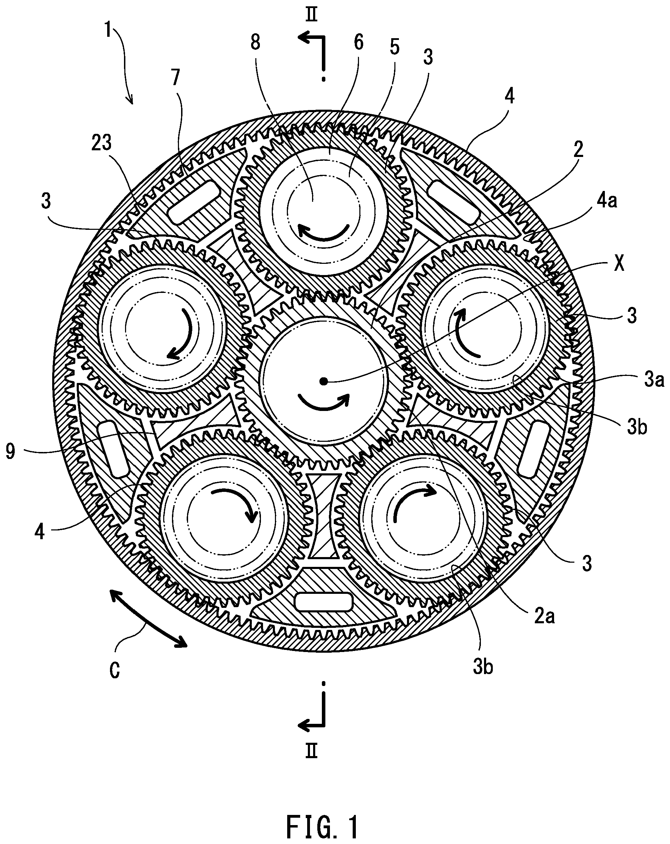

FIG. 1 is a sectional view of a planetary gear device 1 according to an embodiment when viewed in an axial direction X. A direction in which an axis X of the planetary gear device 1 extends is referred to as the axial direction X. As shown in FIG. 1, the planetary gear device 1 is used as, for example, a speed reducer of an aircraft engine but is not limited to this. As shown in FIG. 1, the planetary gear device 1 includes a sun gear 2, planetary gears 3, a ring gear 4, planetary shafts 5, bearings 6, a carrier 7, fasteners 8, and baffles 9.

The sun gear 2 includes external teeth 2a lined up in a circumferential direction around the axis X. The planetary gears 3 are located along an outer circumference of the sun gear 2 so as to be spaced apart from each other. Each planetary gear 3 includes external teeth 3a. The planetary gear 3 includes a through hole 3b that is open at both sides in the axial direction X. The external teeth 3a of the planetary gears 3 mesh with the external teeth 2a of the sun gear 2. The ring gear 4 includes internal teeth 4a. The internal teeth 4a of the ring gear 4 mesh with the external teeth 3a of the planetary gears 3. The planetary shafts 5 are in the corresponding through holes 3b of the planetary gears 3. Each bearing 6 is located between the corresponding planetary shaft 5 and the corresponding planetary gear 3. To be specific, the planetary gear 3 is rotatably supported by the planetary shaft 5 through the bearing 6.

The carrier 7 is fixed to end portions of the planetary shafts 5 by the fasteners 8. When the carrier 7 rotates about the axis X, each planetary gear 3 revolves around the axis X while rotating about its own axis. A detailed structure of the carrier 7 will be described later. Each of below-described bridges 23 of the carrier 7 is located at a radially inner side of the ring gear 4 and is located between the planetary gears 3 adjacent to each other in a circumferential direction C around the axis X. The bridge 23 is spaced apart from the sun gear 2, the planetary gears 3, and the ring gear 4. Each baffle 9 is located at a radially inner side of the bridge 23 of the carrier 7 and is located between the planetary gears 3 adjacent to each other in the circumferential direction C. The baffle 9 is spaced apart from the sun gear 2, the planetary gears 3, and the carrier 7.

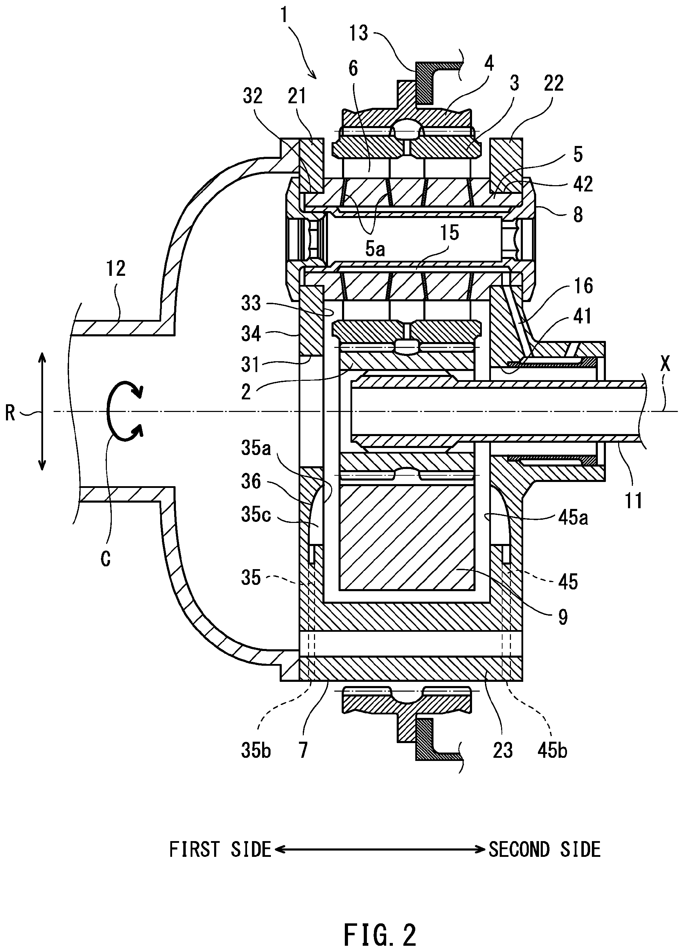

FIG. 2 is a sectional view taken along line II-II of FIG. 1. As shown in FIG. 2, the sun gear 2 is connected to an input shaft 11 so as to rotate integrally with the input shaft 11. The carrier 7 is connected to an output shaft 12 so as to rotate integrally with the output shaft 12. The ring gear 4 is fixed to a stationary body 13. To be specific, the planetary gear device 1 of the present embodiment is of a planetary type. For example, the input shaft 11 may be a driving shaft connected to a turbine of an aircraft engine, and the output shaft 12 may be a shaft connected to a fan of the aircraft engine. Moreover, the stationary body 13 may be a bracket connected to a casing of the aircraft engine. The input shaft 11 and the output shaft 12 may be hollow shafts. The input shaft 11 is splined to an inner peripheral surface of the sun gear 2. The output shaft 12 is fixed to an outer peripheral portion of the carrier 7. In the axial direction X, a side where the output shaft 12 is located when viewed from the planetary gear device 1 is referred to as a first side, and a side where the input shaft 11 is located when viewed from the planetary gear device 1 is referred to as a second side.

The carrier 7 includes a first plate 21, a second plate 22, and the bridges 23. The first plate 21 is located at the first side of a group including the sun gear 2 and the planetary gears 3 in the axial direction X. The second plate 22 is located at the second side of the group including the sun gear 2 and the planetary gears 3 in the axial direction X. The first plate 21 and the second plate 22 are located such that main surfaces thereof are directed in the axial direction X. An inner side surface 33 of the first plate 21 is directed to the second side in the axial direction X. An outer side surface 34 of the first plate 21 is directed to the first side in the axial direction X. An inner side surface 43 of the second plate 22 is directed to the first side in the axial direction X. An outer side surface 44 of the second plate 22 is directed to the second side in the axial direction X. To be specific, the inner side surface 33 of the first plate 21 and the inner side surface 43 of the second plate 22 are opposed to the group including the sun gear 2 and the planetary gears 3.

There is a gap between the inner side surface 33 of the first plate 21 and the group including the sun gear 2 and the planetary gears 3 in the axial direction X. There is also a gap between the inner side surface 43 of the second plate 22 and the group including the sun gear 2 and the planetary gears 3 in the axial direction X. The first plate 21 includes a center hole 31 at a middle portion thereof. The first plate 21 includes support holes 32 located so as to be spaced apart from each other in the circumferential direction C.

The carrier 7 is larger in size in the axial direction X than the ring gear 4. Specifically, the first plate 21 and the second plate 22 are located outside the ring gear 4 in the axial direction X. To be specific, when viewed in a radial direction R orthogonal to the axial direction X, the first plate 21 and the second plate 22 do not overlap the ring gear 4. The bridges 23 couple an outer peripheral portion of the first plate 21 to an outer peripheral portion of the second plate 22. The bridges 23 are located so as to be spaced apart from each other in the circumferential direction C. The bridge 23 are hollow but may be solid. The bridges 23 are located inside the ring gear 4 in the radial direction R. To be specific, when viewed in the radial direction R, the bridges 23 overlap the ring gear 4.

The baffles 9 are connected to the carrier 7. The baffles 9 guide lubricating oil such that the lubricating oil flows toward places where gears mesh with each other. The baffles 9 may be separated from the carrier 7 or may be integrated with the carrier 7.

The planetary shafts 5 are in the through holes 3b of the planetary gears 3 through the bearings 6. The bearings 6 may be rolling bearings or sliding bearings. The planetary shafts 5 are hollow shafts. The planetary shafts 5 are supported by the carrier 7. First end portions of the planetary shafts 5 are fitted to the support holes 32 of the first plate 21. Second end portions of the planetary shafts 5 are fitted to support holes 42 of the second plate 22. The fasteners 8 are in hollow spaces of the planetary shafts 5. The fasteners 8 fix the first end portions of the planetary shafts 5 to the first plate 21 and fix the second end portions of the planetary shafts 5 to the second plate 22.

An oil storage chamber 15 is defined between an inner peripheral surface of each planetary shaft 5 and an outer peripheral surface of each fastener 8. The planetary shaft 5 includes oil supply holes 5a through which the lubricating oil is introduced from the oil storage chamber 15 to the bearing 6. The second plate 22 of the carrier 7 and the planetary shaft 5 include a lubricating oil passage 16 communicating with the oil storage chamber 15. The lubricating oil passage 16 communicates with an oil pump. To be specific, the lubricating oil which has been supplied from the oil pump to the lubricating oil passage 16 flows through the oil storage chamber 15 and the oil supply holes 5a in this order to reach the bearing 6.

The first plate 21 of the carrier 7 includes oil discharge passages 35. Each of the oil discharge passages 35 includes an oil inlet 35a and an oil outlet 35b. The oil inlets 35a are open on the inner side surface 33 of the first plate 21. The oil inlets 35a are located inside the bridges 23 of the carrier 7 in the radial direction R.

The oil outlets 35b are located outside the oil inlets 35a in the radial direction R. Specifically, the oil outlets 35b are located outside the planetary shafts 5 in the radial direction R. Preferably, the oil outlets 35b are located outside the through holes 3b of the planetary gears 3 in the radial direction R. In the present embodiment, the oil outlets 35b are open on the outer peripheral portion of the carrier 7.

The oil outlets 35b are directed to the outside of the planetary gear device 1. In the present embodiment, the oil outlets 35b are directed to the outside of an assembly including the sun gear 2, the planetary gears 3, the ring gear 4, the planetary shafts 5, and the carrier 7. Specifically, the oil outlets 35b are located outside the ring gear 4 in the axial direction X and are directed to the outside in the radial direction R.

The inner side surface 33 of the first plate 21 includes depressed surfaces 36 defining depressed spaces 35c. The depressed surfaces 36 are located inside the bridges 23 in the radial direction R. The depressed spaces 35c are directed to the second side in the axial direction X so as to be directed to a gap between the first plate 21 and the group including the sun gear 2 and the planetary gears 3. The depressed spaces 35c serve as part of the oil discharge passages 35. Openings of the depressed spaces 35c which are directed in the axial direction X are the oil inlets 35a.

As with the first plate 21, the second plate 22 includes oil discharge passages 45 each including an oil inlet 45a and an oil outlet 45b. The oil discharge passages 45 of the second plate 22 are similar in configuration to the oil discharge passages 35 of the first plate 21. Therefore, hereinafter, the oil discharge passages 35 of the first plate 21 will be representatively described in detail.

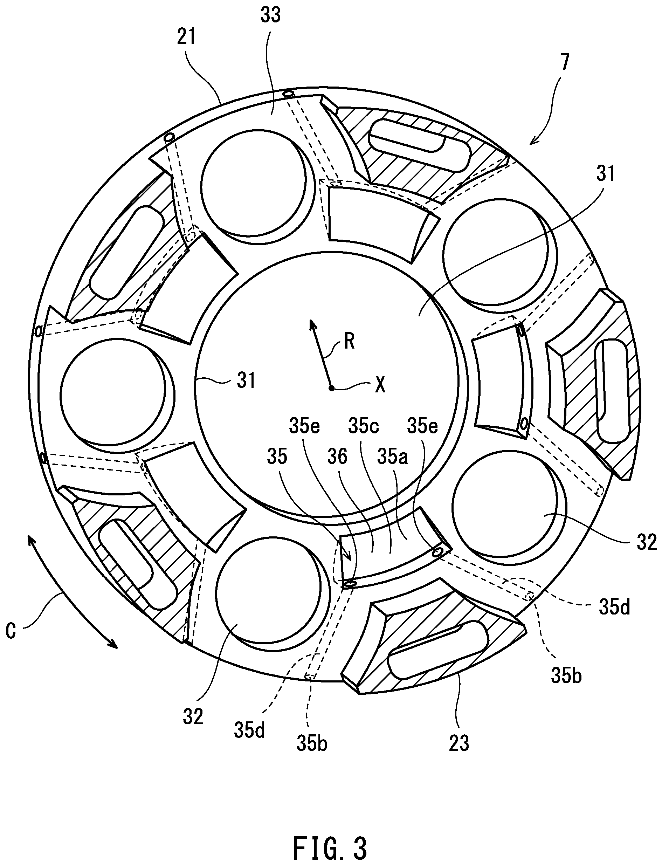

FIG. 3 is a sectional perspective view of the carrier 7 of FIG. 2. As shown in FIG. 3, the first plate 21 includes the oil discharge passages 35. Each of the oil discharge passages 35 includes one depressed space 35c and two oil passages 35d. The depressed space 35c is open on the inner side surface 33 of the first plate 21, and the oil passages 35d communicate with the depressed space 35c. The number of oil passages 35d communicating with the depressed space 35c is not limited to two and may be one or may be three or more.

The depressed space 35c is located inside the bridge 23 in the radial direction R and between the two support holes 32 adjacent to each other in the circumferential direction C. In the present embodiment, a length of the depressed space 35c in the circumferential direction C is longer than a length of the depressed space 35c in the radial direction R. For example, the length of the depressed space 35c in the circumferential direction C may be 50% or more and 90% or less of a distance between the two adjacent support holes 32 in the circumferential direction C. For example, the length of the depressed space 35c in the radial direction R may be 50% or more and 90% or less of a distance from an outer edge of the center hole 31 to the bridge 23 in the radial direction R.

An opening of the depressed space 35c is the oil inlet 35a of the oil discharge passage 35. The oil passages 35d extend from the depressed space 35c outward in the radial direction R. When viewed in the axial direction X, each oil passage 35d is located between the support hole 32 and the bridge 23. The oil passage 35d includes an introducing port 35e that is open to the depressed space 35c at an inner end thereof in the radial direction R. The oil passage 35d includes the oil outlet 35b at an outer end thereof in the radial direction R. For example, the oil outlet 35b is open on an outer peripheral surface of the first plate 21. The oil outlet 35b may be located at a different portion of the outer peripheral portion of the first plate 21 which is located in the vicinity of the outer peripheral surface of the first plate 21.

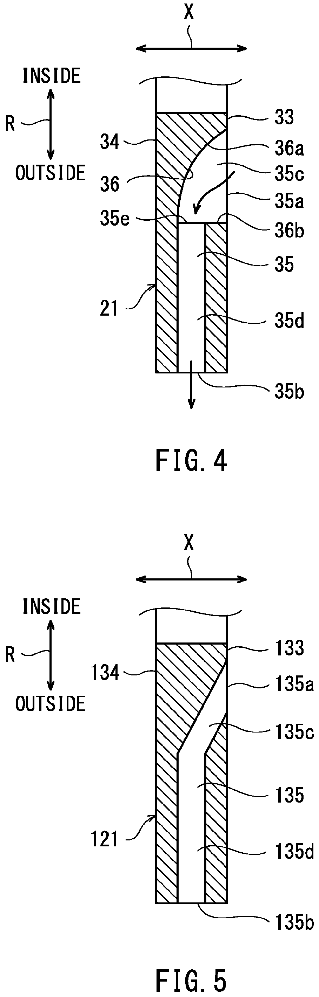

FIG. 4 is an enlarged sectional view of the oil discharge passage 35 shown in FIG. 2. As shown in FIG. 4, the depressed surface 36 of the inner side surface 33 of the first plate 21 includes a slope surface 36a that defines the depressed space 35c from the inside in the radial direction R. The slope surface 36a extends diagonally relative to the axial direction X so as to extend inward in the radial direction R toward the oil inlet 35a. To be specific, the slope surface 36a extends such that a depth of the depressed space 35c in the axial direction X decreases as the depressed space 35c extends inward in the radial direction R. The slope surface 36a is a curved depressed surface but may be a flat surface.

The depressed surface 36 includes a receiving surface 36b that defines the depressed space 35c from the outside in the radial direction R. The receiving surface 36b is directed to the inside in the radial direction R. For example, the receiving surface 36b is parallel to the axial direction X. The introducing port 35e of the oil passage 35d is open on the receiving surface 36b to the depressed space 35c. To be specific, the introducing port 35e of the oil passage 35d is open to the inside in the radial direction R. The introducing port 35e of the oil passage 35d may be open to the depressed space 35c in the axial direction X. Moreover, the depressed surface 36 may be a depressed surface which does not include the slope surface 36a.

When the lubricating oil staying in the vicinity of the inner side surface 33 of the first plate 21 reaches the oil inlet 35a, the lubricating oil is guided by the slope surface 36a and captured by the depressed surface 36. Centrifugal force is applied by the rotation of the carrier 7 to the lubricating oil captured by the depressed surface 36. The lubricating oil to which the centrifugal force has been applied in the depressed space 35c flows through the introducing port 35e into the oil passage 35d, flows through the oil passage 35d outward in the radial direction R, and is discharged through the oil outlet 35b. Thus, the lubricating oil staying in the vicinity of the inner side surface 33 of the first plate 21 is discharged to the outside of the planetary gear device 1. Therefore, the lubricating oil which has lubricated the planetary gear device 1 is prevented from staying inside the planetary gear device 1, and this satisfactorily reduces the energy loss of the planetary gear device 1.

FIG. 5 is an enlarged sectional view of a modified example of the oil discharge passage 35 of FIG. 4. As shown in FIG. 5, an oil discharge passage 135 according to a first modified example includes one oil inlet 135a corresponding to one oil outlet 135b. The oil discharge passage 135 includes a first oil passage 135c and a second oil passage 135d. The first oil passage 135c extends diagonally so as to be inclined relative to the radial direction R. The second oil passage 135d is continuous with the first oil passage 135c and extends in the radial direction R. An inner end of the first oil passage 135c in the radial direction R is the oil inlet 135a and is open on the inner side surface 33 of a plate 121. An outer end of the second oil passage 135d in the radial direction R is the oil outlet 135b and is open on an outer peripheral surface of the plate 121. Since the other components are similar to those in Embodiment 1 described above, explanations thereof are omitted.

### Embodiment 2

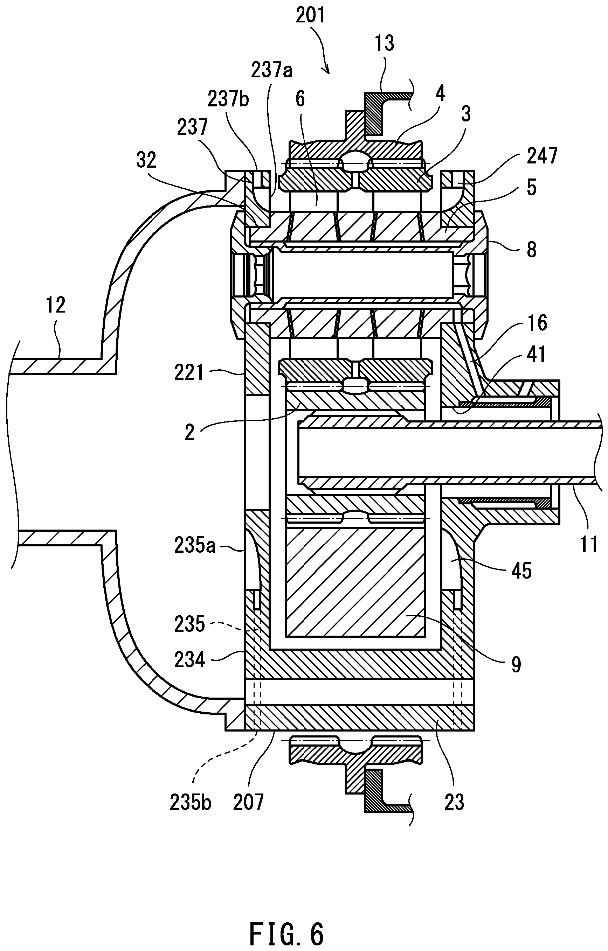

FIG. 6 is a sectional view of a planetary gear device 201 according to Embodiment 2. The same reference signs are used for the same components as Embodiment 1, and the repetition of the same explanation is avoided. As shown in FIG. 6, in Embodiment 2, the direction of an oil inlet 235a of an oil passage 235 of a first plate 221 of a carrier 207 is different from that in Embodiment 1. The oil inlet 235a of the oil passage 235 of the first plate 221 is open on an outer side surface 234 of the first plate 221. To be specific, the oil inlet 235a is open to an internal space of the hollow output shaft 12. Thus, the lubricating oil staying in the hollow space of the output shaft 12 flows through the oil inlet 235a into the oil passage 235 and is discharged through an oil outlet 235b to the outside of the planetary gear device 1 by the centrifugal force.

An oil passage 237 is additionally located at an outer peripheral portion of the first plate 221, and an oil passage 247 is additionally located at an outer peripheral portion of a second plate 222. Since the oil discharge passage 237 and the oil discharge passage 247 are symmetrical to each other, the oil discharge passage 237 will be representatively described. The oil discharge passage 237 includes an oil inlet 237a that is open on an inner side surface 233 of the first plate 221. The oil inlet 237a is opposed to the bearing 6. The oil inlet 237a is located outside the support hole 32 in the radial direction R. A basic shape of the oil discharge passage 237 is substantially the same as the shape of the oil discharge passage 35.

The lubricating oil which has lubricated the bearing 6 flows through the oil inlet 237a into the oil discharge passage 237 and is discharged through an oil outlet 237b to the outside of the planetary gear device 1. The oil discharge passage 237 may be located at the first plate 21 including the oil discharge passage 35 of Embodiment 1. Any one of the oil discharge passage 237 of the first plate 221 and the oil discharge passage 247 of the second plate 222 may be omitted. The plate 221 may include the oil discharge passage 237 without including the oil discharge passage 235, and the plate 222 may include the oil discharge passage 247 without including the oil discharge passage 45. Since the other components are similar to those in Embodiment 1 described above, explanations thereof are omitted.

### Embodiment 3

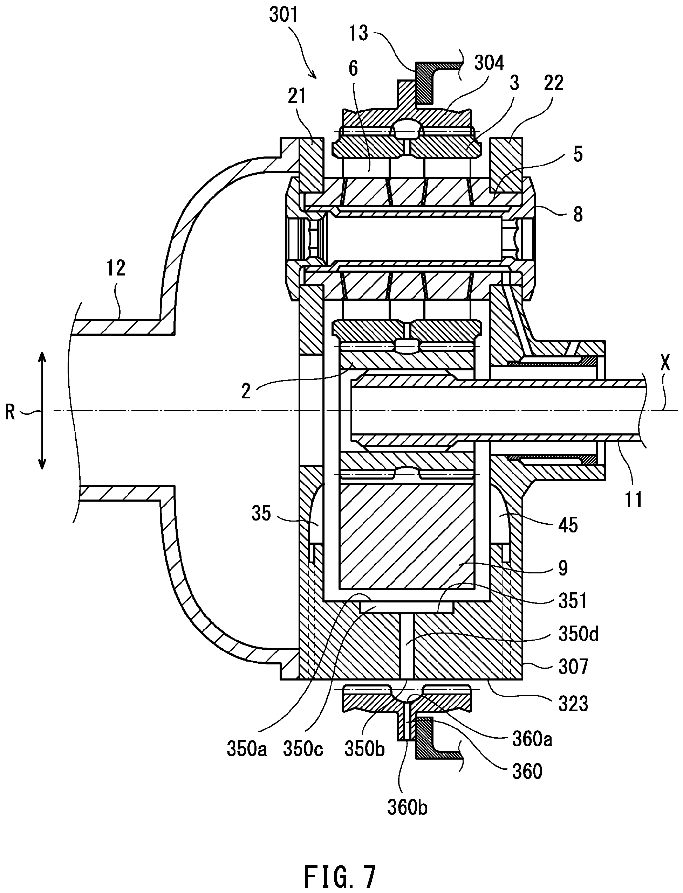

FIG. 7 is a sectional view of a planetary gear device 301 according to Embodiment 3. The same reference signs are used for the same components as Embodiment 1, and the repetition of the same explanation is avoided. As shown in FIG. 3, in the planetary gear device 301 of Embodiment 3, a ring gear 304 includes an oil discharge passage 360, and a carrier 307 includes an oil discharge passage 350 at a bridge 323.

The ring gear 304 includes the oil discharge passage 360 that is open at both sides in the radial direction R. The oil discharge passage 360 of the ring gear 304 includes an oil inlet 360a that is open at an inner end thereof in the radial direction R. The oil inlet 360a may be opposed to the bridge 323 of the carrier 307 in the radial direction R. The oil discharge passage 360 of the ring gear 304 includes an oil outlet 360b that is open at an outer end thereof in the radial direction R. The oil outlet 360b is open to the outside of the planetary gear device 301.

The bridge 323 of the carrier 307 includes the oil discharge passage 350 extending in the radial direction R. The bridge 323 is solid but may include a lightening hole at a place other than the oil discharge passage 350. The oil discharge passage 350 of the bridge 323 includes an oil inlet 350a that is open at an inner end thereof in the radial direction R. The oil inlet 350a may be opposed to the baffle 9 in the radial direction R. In the case of the planetary gear device which does not include the baffle 9, the oil inlet 350a is opposed to the sun gear 2 in the radial direction R. The oil discharge passage 350 of the bridge 323 includes an oil outlet 350b that is open at an outer end thereof in the radial direction R. The oil outlet 350b is open to an inner circumference of the ring gear 4.

An inner peripheral surface of the bridge 323 includes a depressed surface 351 defining a depressed space 350c. The oil discharge passage 350 includes the depressed space 350c and an oil passage 350d. The oil passage 350d communicates with the depressed space 350c and extends in the radial direction R. An opening of the depressed space 350c which is directed to the inside in the radial direction R is the oil inlet 350a. An opening of the oil passage 350d which is directed to the outside in the radial direction R is the oil outlet 350b. The number of oil passages 350d communicating with the depressed space 350c may be one or plural.

The lubricating oil staying in the vicinity of the inner peripheral surface of the bridge 323 of the carrier 307 reaches the oil inlet 350a and is captured by the depressed surface 351. The centrifugal force is applied by the rotation of the carrier 7 to the lubricating oil which has been captured by the depressed surface 351. The lubricating oil to which the centrifugal force has been applied in the depressed space 350c flows into the oil passage 350d, flows through the oil passage 350d outward in the the radial direction R, and is discharged through the oil outlet 350b to the ring gear 304. The lubricating oil which has been discharged through the oil outlet 350b is discharged through the oil discharge passage 360 of the ring gear 304 to the outside of the planetary gear device 301. Since the other components are similar to those in Embodiment 1 described above, explanations thereof are omitted.

The technology of the present disclosure is not limited to the above embodiments. For example, the above embodiments have described an example in which the planetary gear device is used as the speed reducer of the aircraft engine. However, the planetary gear device may be used as part of a power transmitting structure in other applications. The above embodiments have described the planetary gear device that is of the planetary type in which the ring gear is fixed, and the sun gear and the carrier rotate. However, the planetary gear device may be of a star type in which the carrier is fixed, and the sun gear and the ring gear rotate. The planetary gear device may be of a solar type in which the sun gear is fixed, and the ring gear and the carrier rotate.

The planetary gear device does not have to include the baffle 9. The oil discharge passage may be located at at least one selected from the group consisting of the first plate, the second plate, and the bridge. To be specific, the oil discharge passage may be located at only one of the first plate, the second plate, and the bridge, may be located at only two of the first plate, the second plate, and the bridge, or may be located at all of the first plate, the second plate, and the bridge.

The foregoing has described the embodiments as examples of the technology disclosed in the present application. However, the technology in the present disclosure is not limited to these and is applicable to embodiments in which modifications, replacements, additions, omissions, and the like have been suitably made. Moreover, a new embodiment may be prepared by combining the components described in the above embodiment. For example, some of components or methods in one embodiment may be applied to another embodiment. Some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems.

The following aspects disclose preferred embodiments.

### First Aspect

A planetary gear device including:
a sun gear including external teeth lined up in a circumferential direction around an axis;
planetary gears each including
   external teeth that mesh with the external teeth of the sun gear and
   a through hole that is open in an axial direction in which the axis extends;
planetary shafts that are in the respective through holes of the planetary gears and rotatably support the respective planetary gears;
a ring gear including internal teeth that mesh with the external teeth of the planetary gears; and
a carrier including a plate that supports first end portions of the planetary shafts, wherein
the plate includes at least one oil discharge passage including an oil inlet and an oil outlet located outside the oil inlet in a radial direction orthogonal to the axis.

According to this configuration, when centrifugal force is applied to lubricating oil staying at such a place as to interfere with the planetary gear device, the lubricating oil flows into the oil inlet of the plate of the carrier, flows through the oil discharge passage outward in the radial direction, and is discharged through the oil outlet. Therefore, the lubricating oil which has lubricated the planetary gear device is prevented from staying, and this can satisfactorily reduce the energy loss of the planetary gear device.

### Second Aspect

The planetary gear device according to the first aspect, wherein the oil outlet is directed to an outside of the planetary gear device.

According to this configuration, the lubricating oil which has flowed into the oil inlet of the plate of the carrier is directly discharged through the oil discharge passage to the outside of the planetary gear device. Therefore, the lubricating oil which has lubricated the planetary gear device is suitably prevented from staying, and this can satisfactorily reduce the energy loss of the planetary gear device.

### Third Aspect

The planetary gear device according to the second aspect, wherein the oil outlet is located outside the ring gear in the axial direction.

According to this configuration, the lubricating oil which has flowed out through the oil outlet can be easily discharged to the outside of the planetary gear device.

### Fourth Aspect

The planetary gear device according to the second or third aspect, wherein the oil outlet is located outside the through holes of the planetary gears in the radial direction.

According to this configuration, the lubricating oil which has lubricated the planetary gear device can be quickly discharged to the outside of the planetary gear device.

### Fifth Aspect

The planetary gear device according to any one of the first to fourth aspects, wherein:
the plate includes a side surface directed in the axial direction; and
the oil inlet is open on the side surface.

According to this configuration, the lubricating oil in the vicinity of the side surface of the plate flows into the oil discharge passage, and therefore, the lubricating oil can be prevented from staying in the vicinity of the side surface of the plate.

### Sixth Aspect

The planetary gear device according to the fifth aspect, wherein the side surface of the plate is an inner side surface opposed to the planetary gears.

According to this configuration, the lubricating oil in a gap between the planetary gear and the plate flows into the oil discharge passage, and therefore, the lubricating oil can be prevented from staying in this gap.

### Seventh Aspect

The planetary gear device according to the fifth or sixth aspect, wherein:
the side surface of the plate includes a depressed surface defining a depressed space including an opening directed in the axial direction;
the oil discharge passage includes the depressed space and at least one oil passage that extends from the depressed space outward in the radial direction and includes the oil outlet;
the oil inlet is the opening of the depressed space; and
the oil passage includes an introducing port that is open on the depressed surface.

According to this configuration, the lubricating oil in the vicinity of the side surface of the plate is captured by the depressed surface of the side surface of the plate. The captured lubricating oil flows through the introducing port into the oil passage and is discharged through the oil outlet. Therefore, the lubricating oil in the vicinity of the side surface of the plate can be effectively introduced to the oil discharge passage.

### Eighth Aspect

The planetary gear device according to the seventh aspect, wherein:
the at least one oil passage includes oil passages; and
the introducing ports of the oil passages are open on the depressed surface.

According to this configuration, the lubricating oil captured by the depressed surface can be quickly discharged by the oil passages.

### Ninth Aspect

The planetary gear device according to the seventh or eighth aspect, wherein:
the depressed surface includes a slope surface that defines the depressed space from an inside in the radial direction; and
the slope surface extends diagonally relative to the axial direction so as to extend inward in the radial direction toward the oil inlet.

According to this configuration, the lubricating oil in the vicinity of the side surface of the plate is smoothly guided by the slope surface, and therefore, the lubricating oil can be easily captured by the depressed surface.

### Tenth Aspect

The planetary gear device according to any one of the seventh to ninth aspects, wherein:
the plate includes support holes at which the first end portions of the planetary shafts are respectively located and which are lined up in the circumferential direction; and
the depressed surface is located between two support holes adjacent to each other in the circumferential direction among the support holes.

According to this configuration, the depressed space can be made large, and therefore, the amount of lubricating oil captured by the depressed surface can be increased.

### Eleventh Aspect

The planetary gear device according to the tenth aspect, wherein:
the plate is a first plate;
the carrier includes
   a second plate that supports second end portions of the planetary shafts and
   a bridge that connects an outer peripheral portion of the first plate to an outer peripheral portion of the second plate; and
the depressed surface is located inside the bridge in the radial direction.

According to this configuration, the lubricating oil located inside the bridge of the carrier in the radial direction can be discharged by the oil discharge passage.

### Twelfth Aspect

The planetary gear device according to any one of the sixth to eleventh aspects, wherein:
the plate includes support holes at which the first end portions of the planetary shafts are respectively located and which are lined up in the circumferential direction; and
the oil inlet is located outside one of the support holes in the radial direction.

According to this configuration, the lubricating oil which has flowed out from between the planetary shaft and the planetary gear can be smoothly introduced to the oil discharge passage.

### Reference Signs List

1, 201, 301 planetary gear device
2 sun gear
2a external teeth
3 planetary gear
3a external teeth
3b through hole
4, 304 ring gear
4a internal teeth
5 planetary shaft
6 bearing
7, 307 carrier
8 fastener
21, 121, 221 first plate
22, 222 second plate
23, 323 bridge
32, 42 support hole
33, 43, 233, 243 inner side surface
34, 44, 234 outer side surface
35, 45, 235, 237, 247, 350 oil discharge passage
35a, 45a, 235a, 237a, 247a, 350a oil inlet
35b, 45b, 235b, 237b, 247b, 350b oil outlet
35c, 350c depressed space
35d, 350d oil passage
35e introducing port
36 depressed surface
36a slope surface

## Claims

1. A planetary gear device comprising:
a sun gear including external teeth lined up in a circumferential direction around an axis;
planetary gears each including
external teeth that mesh with the external teeth of the sun gear and
a through hole that is open in an axial direction in which the axis extends;
planetary shafts that are in the respective through holes of the planetary gears and rotatably support the respective planetary gears;
a ring gear including internal teeth that mesh with the external teeth of the planetary gears; and
a carrier including a plate that supports first end portions of the planetary shafts, wherein
the plate includes at least one oil discharge passage including an oil inlet and an oil outlet located outside the oil inlet in a radial direction orthogonal to the axis.

2. The planetary gear device according to claim 1, wherein the oil outlet is directed to an outside of the planetary gear device.

3. The planetary gear device according to claim 2, wherein the oil outlet is located outside the ring gear in the axial direction.

4. The planetary gear device according to claim 2 or 3, wherein the oil outlet is located outside the through holes of the planetary gears in the radial direction.

5. The planetary gear device according to any one of claims 1 to 4, wherein:
the plate includes a side surface directed in the axial direction; and
the oil inlet is open on the side surface.

6. The planetary gear device according to claim 5, wherein the side surface of the plate is an inner side surface opposed to the planetary gears.

7. The planetary gear device according to claim 5 or 6, wherein:
the side surface of the plate includes a depressed surface defining a depressed space including an opening directed in the axial direction;
the oil discharge passage includes the depressed space and at least one oil passage that extends from the depressed space outward in the radial direction and includes the oil outlet;
the oil inlet is the opening of the depressed space; and
the oil passage includes an introducing port that is open on the depressed surface.

8. The planetary gear device according to claim 7, wherein:
the at least one oil passage comprises oil passages; and
the introducing ports of the oil passages are open on the depressed surface.

9. The planetary gear device according to claim 7 or 8, wherein:
the depressed surface includes a slope surface that defines the depressed space from an inside in the radial direction; and
the slope surface extends diagonally relative to the axial direction so as to extend inward in the radial direction toward the oil inlet.

10. The planetary gear device according to any one of claims 7 to 9, wherein:
the plate includes support holes at which the first end portions of the planetary shafts are respectively located and which are lined up in the circumferential direction; and
the depressed surface is located between two support holes adjacent to each other in the circumferential direction among the support holes.

11. The planetary gear device according to claim 10, wherein:
the plate is a first plate;
the carrier includes
a second plate that supports second end portions of the planetary shafts and
a bridge that connects an outer peripheral portion of the first plate to an outer peripheral portion of the second plate; and
the depressed surface is located inside the bridge in the radial direction.

12. The planetary gear device according to any one of claims 6 to 11, wherein:
the plate includes support holes at which the first end portions of the planetary shafts are respectively located and which are lined up in the circumferential direction; and
the oil inlet is located outside one of the support holes in the radial direction.
